# EUROPEAN PATENT SPECIFICATION

(11) **EP 2 689 164 B1**
(45) Date of publication and mention of the grant of the patent: **07.01.2015**
(21) Application number: 11712471.9
(22) Date of filing: 22.03.2011
(51) Int. Cl.: F16H 55/17, F03D 11/02

(54) **GEAR WITH VIBRATION SENSOR**
GETRIEBE MIT VIBRATIONSSENSOR
ÉLÉMENT DENTÉ À CAPTEUR DE VIBRATIONS

(43) Date of publication of application: 29.01.2014
(73) Proprietor: Aktiebolaget SKF, 415 50 Göteborg (SE)
(72) Inventor: ZIEGLER, Sebastian, NL-3431 LS Nieuwegein (NL); CHRISTIANSSON, Goran, NL-3762 XJ Soest (NL)
(74) Representative: Burö, Sven Peter
(86) International application number: PCT/EP2011/001409
(87) International publication number: WO 2012/126485

(56) References cited:
- WO-A1-2007/085259
- DE-A1- 10 324 966
- DE-A1-102004 037 540
- DE-A1-102008 045 476
- US-A1- 2005 109 174

## Description

### Field of the invention

This invention relates to a gear with a vibration sensor, the vibration sensor comprising an accelerometer coupled to a data transmitter.

### Background of the invention

In e.g. wind turbines, it is important to monitor vibrations of the gears. Monitoring vibrations makes it possible to detect e.g. wear and micro-pitting before it causes serious malfunctioning of the turbine, and to initiate preventive or corrective maintenance before any major damage occurs. Usually, the gears are comprised in a gear box to which the vibration sensor is attached. A problem of this configuration is that the distance between the vibration sensor and the gears rotating in the gear box makes it difficult to pick up or identify the significant vibration frequencies. Additionally, the vibration signal in such a configuration is inherently noisy because of vibration in other gear box components.

DE 102001 037540 A, which is considered the most relevant prior art, discloses (e.g. fig. 14) a gear comprising a capacitive vibration sensor mounted within a cavity between subsequent teeth.

In the international patent application WO 2007/085259, a wind turbine with an epicyclic gear box with at least two planet gears is disclosed. A pre-packaged vibration sensor is attached to rotating parts inside the gear box, on or in close proximity of one or more of the planet gear shafts. As a result the vibration detection is improved. However, there still is a need to further improve the accuracy of the vibration detection.

### Object of the invention

It is an object of the invention to provide a gear with further improved vibration detection.

### Summary of the invention

According to a first aspect of the invention, this object is achieved by providing a gear comprising a gear surface with a vibration sensor, the vibration sensor comprising an accelerometer coupled to a data transmitter, wherein the vibration sensor is provided within a cavity in the gear surface.

In a gear according to the invention, the cavity surface functions as the sensor well and the vibration sensor components are embedded in the gear surface. No separate packaging of the different components of the vibration sensor is needed. As a result, vibration measurements are less influenced by background noise caused, for example, by a vibration sensor packaging which is not thoroughly fixed to the gear surface. Furthermore, metal particles in the lubricant cannot touch the vibration sensor attachment which would lead to failure of the electronics. If the vibration sensor were comprised in a vibration sensor packaging attached to the gear surface, vibrations of the vibration sensor packaging with respect to the gear surface would lead to less accurate measurements of vibrations of the gear surface itself. With the gear according to the invention, the background noise in the vibration measurements is considerably reduced.

Multiple cavities may be provided, each comprising at least one vibration sensor. Different types of vibration sensors may be provided for enabling measuring vibrations having different causes, frequencies and/or directions of movement. Examples of vibrations that may be monitored are the eigenfrequency of the gear and gearbox, damping of a lubricant film between gears or vertical and/or horizontal displacement of a gear.

The cavity is filled with potting material for sealing the vibration sensor. The potting material protects the electronics in the vibration sensor from e.g. water, dirt or lubricant oil. Additionally, the potting material may further reduce background noise and improve the fixture of the vibration sensor to the cavity wall.

These and other aspects of the invention are apparent from and will be elucidated with reference to the embodiments described hereinafter.

### Brief description of the drawings

In the drawings:
Figure 1 shows a front view of the gear and the gear surface according to the invention,
Figure 2 shows a cross section of the gear of figure 1,
Figure 3 shows a close-up of the cross section shown in figure 2, and
Figures 4 and 5 show alternative embodiments of gears according to the invention.

### Detailed description of the invention

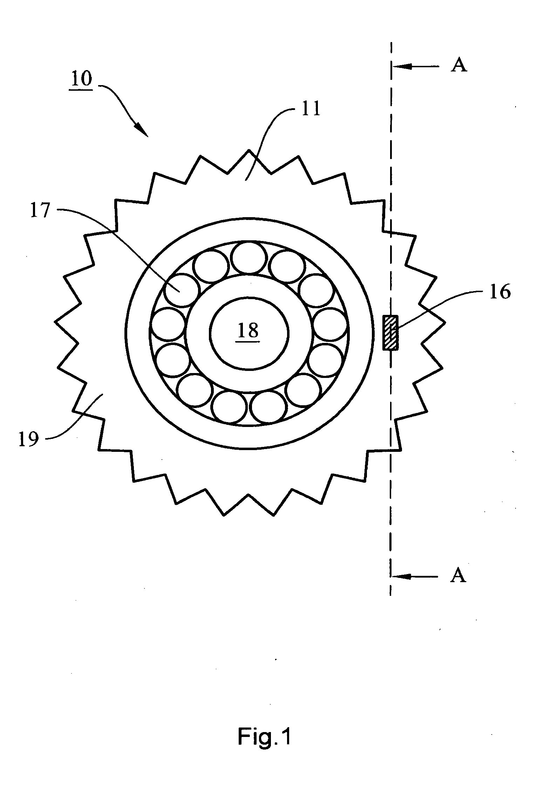

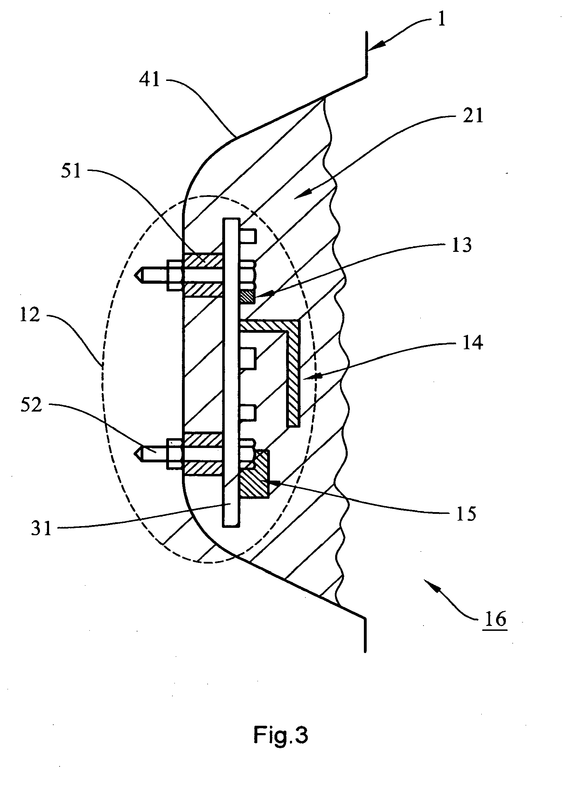

Figure 1 shows a front view of the gear 10 and a planar gear surface 11 according to the invention. The gear surface 11 is coupled to a gear shaft 18 via bearings 17 enabling the gear surface 11 to rotate with respect to the gear shaft 18. The invention is however not limited to this specific gear arrangement. The invention can be used for measuring vibrations in any gear in any type of gear arrangement. For example, the invention may be used in one or more gear surfaces 11 of the planet gears in an epicyclic gear box. At a radially outer edge of the gear surface 11, gear teeth 19 for meshing with another gear are provided. The gear surface 11 further comprises a cavity 16 wherein a vibration sensor is embedded. Integrating the vibration sensor in the gear surface 11 enables direct measurement of vibrations of the gear with little interference of nearby vibration sources. The vibration sensor is described in detail below with reference to figure 3.

The gear 10 may be part of a gear system with multiple gears 10. Each gear in the gear system may have a cavity 16 and a vibration sensor. The gear 10 may have more than one cavity 16 for accommodating multiple vibration sensors. For example, vibration sensors may be located at different radii. A vibration sensor on an outer radius is closer to the teeth and will pick up a stronger signal, when the flanks of the teeth are meshing. A vibration sensor on an inner radius will pick up more of the overall vibration signal and gear movement. The signals from different vibration sensors can be correlated with each other to detect damping of the gear material in different frequency ranges.

Alternatively or additionally, different cavities may have vibration sensors with different geometric orientations, such that vibrations in different directions can be detected with higher accuracy. For a complete 3D vibration monitoring system, the orientations of the vibration sensors may cover three axes for different sensor types.

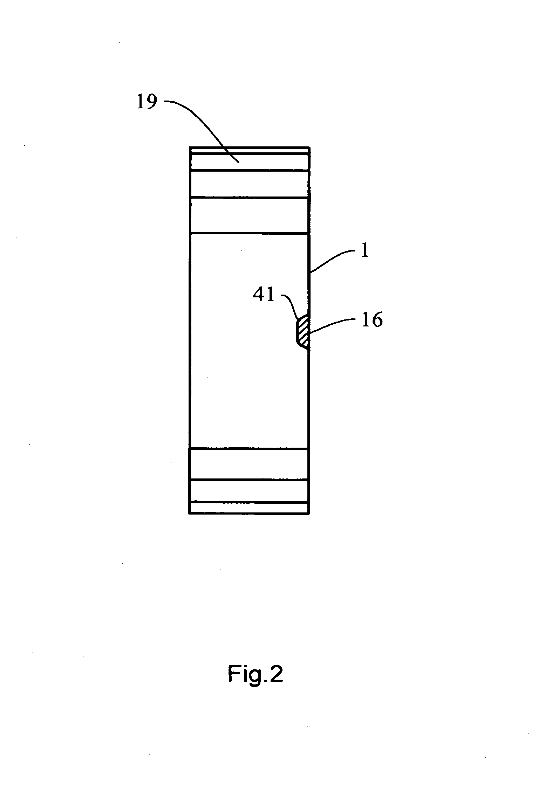

Figure 2 shows a cross section of the gear 10 of figure 1. The cross section is made along the line *A-A* in figure 1. The cross section shows a view on the inside of the gear surface 11. At the top and bottom of this side view gear teeth 19 are visible. Figure 2 also shows a cross section of the cavity 16 in the gear surface 11. According to the invention the vibration sensor is not attached on the gear surface, but put inside the cavity 16. As already described above, there is no need now to put the vibration sensor components in a separate package. The cavity surface functions as the sensor well. In addition to the improved accuracy caused by providing the vibration sensor in such a cavity 16, this arrangement has the advantage that the gear surface 11 does not have any protrusions. The flat gear surface 11 does not interfere with the lubricant flow between the gears. Furthermore, the risk of handling damage during assembly or maintenance of the gear system is reduced.

For an even more flat surface, the cavity 16 may be closed by a lid. The lid is preferably made of the same material as the gear surface 11, but may also consist of other materials. The lid may e.g. be screwed or welded to the gear surface 11. In a special embodiment, the gear 10 may consist of two separate parts to be joined together to form the gear 10. A first part comprising a front gear surface and a second part comprising a back gear surface may together form the gear 10. When assembling the gear 10, the vibration sensor is placed in a cavity in the first part or the second part. Then, both parts are put together and the vibration sensor is enclosed by both the front gear surface and the back gear surface.

Figure 3 shows a close-up of the cross-section shown in figure 2. This close-up shows the cavity 16 and the vibration sensor 12 in detail. The vibration sensor 12 components may be attached directly to the cavity wall 41., The vibration sensor 12 components are integrated on a printed circuit board (PCB) 31. The vibration sensor 12 comprises an accelerometer 13. For example, a MEMS (micro-electromechanical system) or piezo accelerometer may be used for converting vibrations to electrical signals. The accelerometer 13 may also comprise a strain gauge or acoustic emission sensor. Different sensor types may be used for measuring different type of vibrations or vibrations in different frequency ranges. A MEMS accelerometer, for example, is very suitable for measuring vibrations in a 0 - 5 kHz range, which is relevant for measuring general gear movement. A piezo sensor may be selected, e.g. for measuring vibrations in a 1- 40 kHz range typical for eigenfrequencies of the system or for lubricant damping. Acoustic emission may be used in the 200 - 500 kHz range, e.g., for monitoring pitting progression and other condition monitoring purposes.

An amplifier (not shown) may be provided for amplifying the electrical signals from the accelerometer 13. Suitably, an antenna 14 is provided for wireless transmission of the vibration data to an external receiver and data processing unit. Instead of using an antenna 14 for wireless data transmission, a slip ring may be used for transporting the sensor data via wires. A micro controller (not shown) may be coupled to the other electrical components for controlling the vibration measurements and data communication. An electrical power source 15, such as a battery, is provided for supplying electrical power to the electrical components of the vibration sensor 12. Alternatively, the electric power source 15 may be arranged for deriving power from electrical signals coming from the accelerometer 13. For example, part of the electric energy in the signals coming from the accelerometer 13 may be used for loading a capacitor that is coupled to the antenna 14 for periodically or occasionally transmitting vibration data to an external receiver.

The PCB 31 is attached to the cavity wall 41. In this exemplary embodiment, the PCB 31 is fixed to the cavity wall 41 by screws 52 via, e.g., metal or plastic spacers 51. Alternatively, the PCB 31 may be attached using a press fit configuration or by providing the PCB 31 in a metal frame to be welded to the cavity wall 41. Further, the cavity 16 is filled with potting material 21, such as polyurethane, epoxy-resins or silicone may be used as potting materials 21. The potting material 21 has multiple advantageous effects. It covers the electronics and protects them against e.g. handling damage, dirt and lubricant. The potting material 21 also improves the fixture of the PCB 31 to the cavity wall 41 and thus reduces the noise caused by vibrations of the vibration sensor 12 relative to the gear surface. If the cavity 16 is filled with potting material 21 to the level of the gear surface 11, the cavity 16 does not influence the flow of lubricant along the gear surface 11. Instead of filling the complete cavity 16 with potting material 21, the vibration sensor 12 components may be covered by a water/and or oil resistant coating for protection against, e.g., corrosion or dirt.

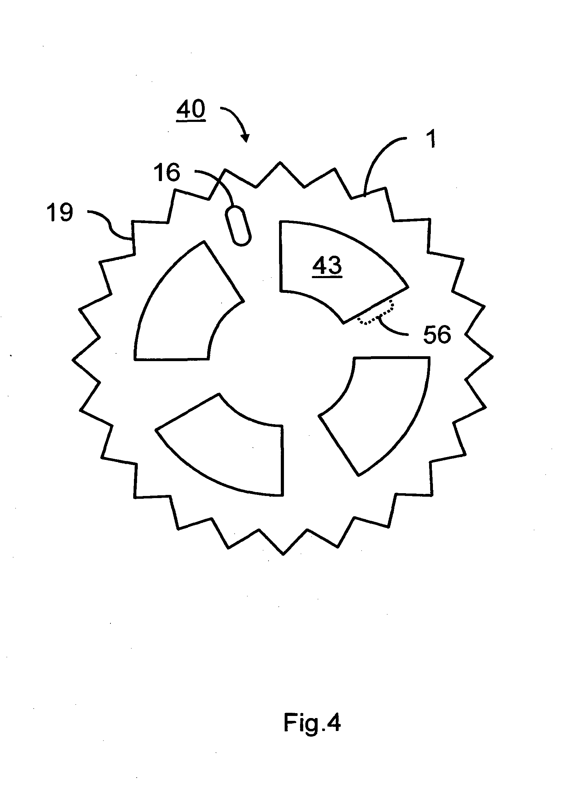

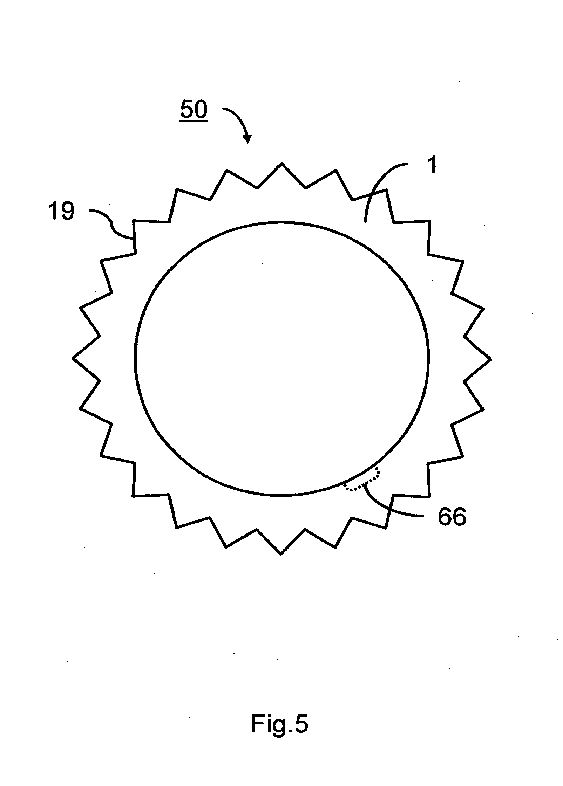

Figures 4 and 5 show alternative embodiments of gears 40, 50 according to the invention. In figure 4, a gear 40 is shown wherein parts 43 of the gear surface 11 have been removed, e.g. to reduce weight or costs. The gear 40 in this example comprises two cavities 16, 56 with a vibration sensor. A first cavity 16 is provided in the gear surface in a radial plane, in the same way as shown in figures 1 to 3. The first cavity 16 is situated at either the front surface or the back surface of the gear 40. If the first cavity 16 extends through the complete thickness of the gear surface 11, then the vibration sensor may be installed midway through the gear surface 11.

In the example of figure 4, an additional cavity 56 is provided in a side wall of one of the left-out parts 43. The additional cavity 56 thus lies in a plane perpendicular to the radial plane. As a result the front surface and the back surface of the gear 40 form part of the cavity wall of the additional cavity 56. The additional cavity 56 and the corresponding vibration sensor are suitably located in or close to the middle of the gear surface 11, just between the back surface and the front surface.

In figure 5, the gear 50 is ring shaped. A cavity 66 is provided on an inner circumference of the ring. Like the additional cavity 56 in figure 4, the cavity 66 is suitably situated midway between the back surface and the front surface of the gear 50.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A gear (10) comprising a gear surface (11) with a vibration sensor (12), the vibration sensor (12) comprising an accelerometer (13) coupled to a data transmitter (14), wherein:
the vibration sensor (12) is provided within a cavity (16) in the gear surface (11) and a surface (41) of the cavity (16) functions as a sensor well for comprising the accelerometer (13) and the data transmitter (14);
the accelerometer (13) and the data transmitter (14) are mounted on a printed circuit board (31) that is attached to the surface (41) of the cavity (16); and
the cavity (16) is filled with potting material (21) for sealing the vibration sensor (12).

2. A gear (10) as claimed in claim 1, wherein the printed circuit board (31) is attached to the surface (41) of the cavity (16) via metal or plastic spacers (51).

3. A gear (10) as claimed in claim 1, wherein the vibration sensor further comprises an electric power source (15) for providing electrical power.

4. A gear (10) as claimed in claim 3, wherein the electric power source (15) is arranged for deriving power from electrical signals coming from the accelerometer (13).

5. A gear (10) as claimed in claim 1, wherein the gear surface (11) comprises at least one additional cavity (56) for comprising an additional vibration sensor.

## Patentansprüche

1. Getriebe (10), das eine Getriebeoberfläche (11) mit einem Vibrationssensor (12) umfasst, wobei der Vibrationssensor (12) einen an einen Datengeber (14) gekoppelten Beschleunigungsmesser (13) umfasst, wobei:
der Vibrationssensor (12) innerhalb eines Hohlraums (16) in der Getriebeoberfläche (11) vorgesehen ist und eine Oberfläche (41) des Hohlraums (16) als eine Sensormulde zum Aufnehmen des Beschleunigungsmessers (13) und des Datengebers (14) fungiert;
der Beschleunigungsmesser (13) und der Datengeber (14) auf einer Leiterplatte (31) montiert sind, die an der Oberfläche (41) des Hohlraums (16) angebracht ist; und
der Hohlraum (16) mit einem Vergussmaterial (21) zum Versiegeln des Vibrationssensors (12) gefüllt ist.

2. Getriebe (10) nach Anspruch 1, wobei die Leiterplatte (31) über Metall- oder Kunststoffabstandshalter (51) an der Oberfläche (41) des Hohlraums (16) angebracht ist.

3. Getriebe (10) nach Anspruch 1, wobei der Vibrationssensor weiterhin eine Stromquelle (15) zum Liefern von elektrischer Leistung umfasst.

4. Getriebe (10) nach Anspruch 3, wobei die Stromquelle (15) ausgelegt ist zum Ableiten von Leistung von von dem Beschleunigungsmesser (13) kommenden elektrischen Signalen.

5. Getriebe (10) nach Anspruch 1, wobei die Getriebeoberfläche (11) mindestens einen zusätzlichen Hohlraum (56) zum Aufnehmen eines zusätzlichen Vibrationssensors umfasst.

## Revendications

1. Roue dentée (10) comprenant une surface d'engrènement (11) avec un capteur de vibrations (12), le capteur de vibrations (12) comprenant un accéléromètre (13) accouplé à un émetteur de données (14),
le capteur de vibrations (12) étant prévu dans une cavité (16) dans la surface d'engrènement (11) et une surface (41) de la cavité (16) servant de puits de capteur pour recevoir l'accéléromètre (13) et l'émetteur de données (14) ; l'accéléromètre (13) et l'émetteur de données (14) étant montés sur une carte à circuits imprimés (31) qui est attachée à la surface (41) de la cavité (16) ; et
la cavité (16) étant remplie de matériau d'enrobage (21) pour sceller le capteur de vibrations (12).

2. Roue dentée (10) selon la revendication 1, la carte à circuits imprimés (31) étant attachée à la surface (41) de la cavité (16) par le biais d'éléments d'espacement métalliques ou plastiques (51).

3. Roue dentée (10) selon la revendication 1, le capteur de vibrations comprenant en outre une source d'alimentation électrique (15) pour fournir de la puissance électrique.

4. Roue dentée (10) selon la revendication 3, la source d'alimentation électrique (15) étant agencée de manière à dériver de la puissance de signaux électriques provenant de l'accéléromètre (13).

5. Roue dentée (10) selon la revendication 1, la surface d'engrènement (11) comprenant au moins une cavité supplémentaire (56) pour recevoir un capteur de vibrations supplémentaire.
